# EUROPÄISCHE PATENTANMELDUNG

(11) **EP 2 990 713 A1**
(43) Veröffentlichungstag der Anmeldung: **02.03.2016**
(21) Anmeldenummer: 14182247.8
(22) Anmeldetag: 26.08.2014
(51) Int. Cl.: F16N 39/00

(54) **Ölmodul für ein Lager eines Turbosatzes**

(71) Anmelder: Siemens Aktiengesellschaft, 80333 München (DE)
(72) Erfinder: Dudda, Tobias, 45468 Mülheim an der Ruhr (DE); Lawrenz, Klaus, 42111 Wuppertal (DE); Obert, Sandra, 40239 Düsseldorf (DE); Strack, Britta, 47445 Moers (DE)

(57) **Zusammenfassung**

Die Erfindung betrifft einen Öltank (8) für die Versorgung von Öl für die Lager (7) eines Turbosatzes (1), wobei der Öltank (8) für die beschleunigte Entgasung des Öls eine Ultraschallsonde (16) aufweist.

## Beschreibung

Die Erfindung betrifft einen Öltank für die Ölversorgung eines Lagers mit Lageröl, wobei der Öltank eine Zuflussöffnung zum Zuführen von Lageröl und eine Abflussöffnung zum Abführen von Lageröl aufweist.

Dampfkraftwerke, GuD-Kraftwerke und Nuklearkraftwerke umfassen unter anderem einen Turbosatz, der in der Regel eine Dampfturbine und einen elektrischen Generator aufweisen. Die Dampfturbine umfasst in der Regel eine Hochdruck-Teilturbine, eine Mitteldruck-Teilturbine und eine Niederdruck-Teilturbine. Die vorgenannten Teilturbinen können in einzelnen separaten Gehäusen ausgebildet werden. Es sind aber auch Ausführungsformen bekannt, bei denen zum Beispiel die Hochdruck- und die Mitteldruck-Teilturbine in einem gemeinsamen Gehäuse angeordnet sind. Neben der Dampfturbine umfasst ein Dampfkraftwerk einen Dampferzeuger, in dem ein Dampf mit vergleichsweise hohen Dampfparametern erzeugt wird. Der aus dem Dampferzeuger ausströmende Frischdampf gelangt zunächst durch die Hochdruck-Teilturbine und strömt anschließend wieder zum Dampferzeuger und wird dort wieder auf eine höhere Temperatur gebracht und zur Mitteldruck-Teilturbine geführt. Nach Durchströmen des Dampfes durch die Mitteldruck-Teilturbine gelangt der Dampf zur Niederdruck-Teilturbine und anschließend zum Kondensator.

Eine Dampfturbine umfasst in der Regel ein Außengehäuse, ein innerhalb des Außengehäuses angeordnetes Innengehäuse und drehbar gelagerten Rotor, der innerhalb des Innengehäuses rotierbar ist. Die Massen der einzelnen Dampfturbinenkomponenten sind vergleichsweise groß. So sind Dampfturbinenrotoren bekannt, die mehrere hundert Tonnen schwer sind. Solche Rotoren müssen geeignet gelagert werden, was durch ölgeschmierte Gleitlager erfolgt. Bei solchen Gleitlagern wird ein Öl unter hohem Druck in eine Lagerschale zugeführt, die beim Hochlaufen und Abfahren des Turbosatzes einen Anhebedruck auf den Rotor ausübt bzw. beim Normalbetrieb des Turbosatzes die Lager mit Öl für die hydrodynamische Schmierung versorgt. Dazu wird ein Kreislauf gebildet, bei dem das Öl aus einem Behälter und über Leitungen mittels Pumpen zu den Lagern zugeführt wird und von dort wieder in den Ölkreislauf zurückgeführt wird.

Die Tankgröße des Ölmoduls steht in einem durch die Umlaufzeit des Rotors und damit des Öls definierten Verhältnis zum erforderlichen Lageröl-Volumenstrom. Im Betrieb entstehen durch Verwirbelungseffekte in den Lagern im Öl kleine Gasbläschen, die unerwünschte Effekte haben. Daher wird Wert darauf gelegt, dass diese Gasbläschen möglichst schnell zu einem hohen Grad durch Ausgasung abgebaut werden. Das Öl wird somit im Ölmodul entgast. In der Regel wird durch die Vorgabe einer maximalen Umlaufzahl des Rotors bzw. des Öls sichergestellt, dass der Tank groß genug ist, so dass von den Turbinenlagern zurückfließendes Öl im Tank ausreichend entgasen kann, bevor es von den Ölpumpen wieder zu den Lagern befördert wird. Gelöst wird dieses Problem derzeit, dass das Öl in einem ausreichend großen Öltank angeordnet wird und das Entgasen (das Zurückbilden der Gasbläschen) inhärent erfolgt, so dass die Dauer für die Entgasung (Entgasungsrate) eine Funktion der Größe des Ölmoduls und der Zeit ist.

Bei einigen Turbinenkonfigurationen, wie zum Beispiel bei einer Gasturbinen-, Generator-, Dampfturbinen-Einwellenanordnung, ist der erforderliche Volumenstrom für das Öl mittlerweile so groß, dass das Ölmodul bedingt durch die Tankgröße gerade noch für den Straßentransport geeignet ist. Werden die Anforderungen noch erhöht, so steigt der erforderliche Lageröl-Volumenstrom bei neuen Turbinenkonfigurationen weiter, wie zum Beispiel bei einer entkoppelten Niederdruck-Teilturbine mit zusätzlicher Schaltkupplung. So wird das Ölmodul zu groß für einen Straßentransport.

Bisher wurde die Entgasung des von den Turbinenlagern zurückfließenden Öls durch eine ausreichende Bemessung der Tankgröße gewährleistet.

An dieser Stelle setzt die Erfindung an.

Aufgabe der Erfindung ist es, einen Öltank für die Ölversorgung eines Lagers anzugeben, das vergleichsweise klein ist.

Gelöst wird diese Aufgabe durch einen Öltank für die Ölversorgung eines Lagers mit Lageröl, wobei der Öltank eine Zuflussöffnung zum Zuführen von Lageröl und eine Abflussöffnung zum Abführen von Lageröl aufweist, wobei im Öltank eine Vorrichtung zum Entgasen von Lageröl angeordnet ist.

Durch den Einsatz solch einer Vorrichtung lässt sich die Entgasung von Flüssigkeiten deutlich beschleunigen. Die Verweilzeit des Öls im Tank und damit die Tankgröße werden reduziert. Dadurch erhöht sich der Einsatzbereich des Ölmoduls bei gleichbleibender Baugröße. Das Ölmodul ist somit weiterhin für den Straßentransport geeignet. Mit der Erfindung wird somit der Ansatz verfolgt, durch eine Vorrichtung aktiv die Entgasung des Lageröls zu beschleunigen. Die Menge an Lageröl bzw. die Größe des Öltanks wird dadurch reduziert.

In den Unteransprüchen sind vorteilhafte Weiterbildungen angegeben.

In einer ersten vorteilhaften Weiterbildung ist die Vorrichtung als Ultraschallsonde ausgebildet. Somit wird durch einen bestimmten physikalischen Effekt die Entgasung beschleunigt. Dazu wird Ultraschall verwendet, mit dem der physikalische Effekt erzeugt wird, dass einzelne Bläschen im Lageröl beschleunigt zerstört werden. Somit wird das Lageröl schneller von diesen störenden Gasbläschen befreit, was eine Reduzierung der Tankgröße ermöglicht.

In einer vorteilhaften Weiterbildung werden zumindest drei Ultraschallsonden im Öltank angeordnet. Somit wird der Gedanke verfolgt, die Ausgasung weiter zu beschleunigen, indem an geeigneten Stellen mehrere Ultraschallsonden angeordnet werden.

In einer weiteren vorteilhaften Weiterbildung weist der Öltank mehrere strömungstechnisch miteinander kommunizierende Kammern auf, wobei in zumindest einer Kammer eine Ultraschallsonde angeordnet ist. Hier wird somit der Ansatz verfolgt, einen Ölkreislauf aufrecht zu erhalten, der mittels Pumpen erfolgt, wobei durch eine mäanderförmige Anordnung des Ölkreislaufs die Größe des Öltanks weiter reduziert werden kann. Vorteilhafterweise wird hierbei in zumindest einer Kammer eine Ultraschallsonde angeordnet. Alternativ können diese in jeder Kammer angeordnet werden.

Vorteilhafterweise ist der Öltank zur Versorgung von Lagern mit Lageröl ausgelegt, wobei die Lager zum Lagern von Strömungsmaschinenrotoren, insbesondere Dampfturbinenrotoren, ausgelegt sind. Die Erfindung kann auch angewendet werden auf andere Ölversorgungssysteme wie beispielsweise Steuerflüssigkeitsmodul, Generatordichtöltank usw..

Die oben beschriebenen Eigenschaften, Merkmale und Vorteile dieser Erfindung, sowie die Art und Weise wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnungen beschrieben. Diese sollte die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.
- Figur 1: zeigt eine schematische Ansicht eines Teils eines Turbosatzes,
- Figur 2: eine schematische Ansicht eines Öltanks und
- Figur 3: eine schematische Ansicht einer alternativen Ausführungsform des Öltanks.

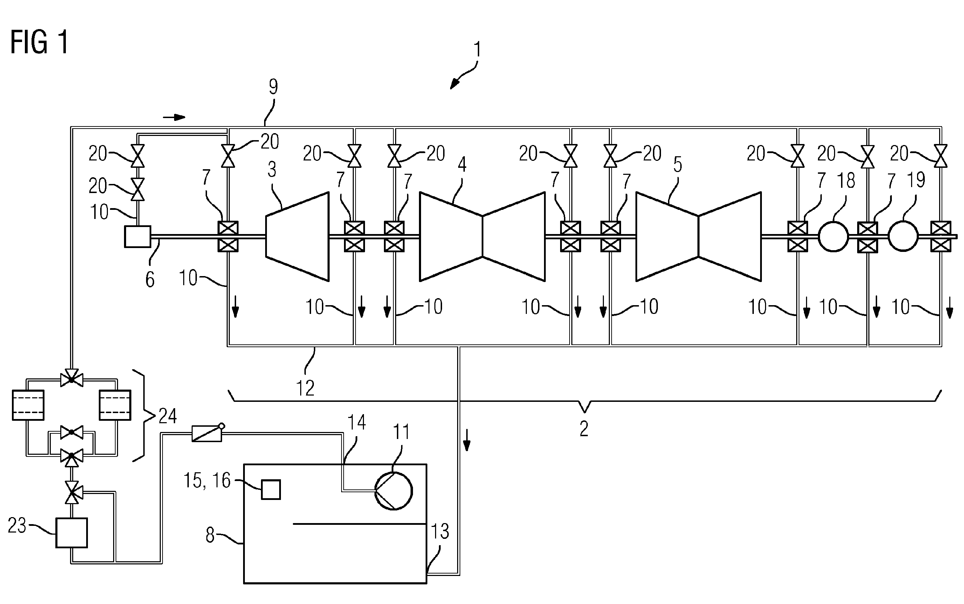

Die Figur 1 zeigt einen Teil eines Turbosatzes 1. Der Turbosatz 1 umfasst eine Dampfturbine 2, wobei die Dampfturbine 2 eine Hochdruck-Teilturbine 3, eine Mitteldruck-Teilturbine 4 und eine Niederdruck-Teilturbine 5 aufweist. Ein Frischdampf strömt aus einem nicht näher dargestellten Dampferzeuger zu einem Frischdampfeinlass der Hochdruck-Teilturbine 3 und strömt anschließend aus der Hochdruck-Teilturbine 3 wieder zu dem Zwischenüberhitzer und wird dort wieder auf eine höhere Temperatur gebracht und anschließend zu einem Dampfeinlass der Mitteldruck-Teilturbine 4 geführt. Nach Durchströmen des Dampfes durch die Mitteldruck-Teilturbine 4 strömt der Dampf zur Niederdruck-Teilturbine 5 und von dort aus zu einem nicht näher dargestellten Kondensator. Der Turbosatz 1 umfasst einen Rotor 6, der in der Figur 1 schematisiert dargestellt ist. Der Rotor 6 wird über mehrere Lager 7 drehbar gelagert. Öl aus einem Öltank 8 gelangt über eine Lageröl-Zuleitung 9 zu den einzelnen Lagern 7. Dazu weist die Lageröl-Zuleitung 9 eine Lageröl-Abzweigung 10 zu jedem Lager 7 auf.

Das Lageröl gelangt über eine Lageröl-Rückführleitung 12 wieder zum Öltank 8. Das Lageröl weist in der Regel einzelne Gasbläschen in der Lageröl-Rückführleitung 12 auf. Der Öltank, der für die Ölversorgung der Lager 7 mit Lageröl ausgebildet ist, weist eine Zuflussöffnung 13 zum Zuführen von Lageröl aus der Lageröl-Rückführleitung 12 auf und eine Abflussöffnung 14 zum Abführen von Lageröl bzw. zum Zuführen von Lageröl über die Lageröl-Zuleitung 9 zu den Lagern 7. Die Erfindung kann auch auf andere Ölversorgungssysteme wie beispielsweise Steuerflüssigkeitsmodul, Generatordichtöltank usw. angewendet werden. Ein Generator 18 ist drehmomentübertragend mit dem Rotor 6 gekoppelt. Ebenso ist eine Erregereinrichtung 19 mit dem Generator 17 gekoppelt.

In jeder Lageröl-Abzweigung 10 ist ein Ventil 20 angeordnet. Des Weiteren ist eine weitere Abzweigung 21 an der Lageröl-Abzweigung 10 angekoppelt, wobei die Abzweigung 21 mit einem Lager 7 für eine Antriebseinheit 22 zum Drehen des Rotors 6 verbunden ist.

Im Öltank 8 ist eine Pumpe 11 zum Befördern des Öls im Öltank 8 in die Lageröl-Zuteilung 9.

Vor der Lageröl-Zuleitung 9 ist eine Kühleirichtung 23 zum Kühlen des Lageröls angeordnet. Nach der Kühlung in der Kühleinrichtung 23 gelangt das Lageröl in eine Filtereinrichtung 24 in der das Lageröl gereinigt wird. Nach der Reinigung in der Filtereinrichtung 24 gelangt das Lageröl in die Lageröl-Zuleitung 9.

Im Öltank 8 ist eine Vorrichtung 15 zum Entgasen des Lageröls angeordnet. Diese Vorrichtung 15 ist als eine Ultraschallsonde 16 ausgebildet. Diese Ultraschallsonde 16 ist möglichst derart angeordnet, dass das Lageröl im Ultraschallfeld angeordnet ist, was zu einer Verkleinerung der Gasbläschen führt und dadurch zu einem beschleunigten Ausgasens des Lageröls führt.

In einer alternativen Ausführungsform kann der Öltank 8 mit zumindest drei Ultraschallsonden ausgebildet werden.

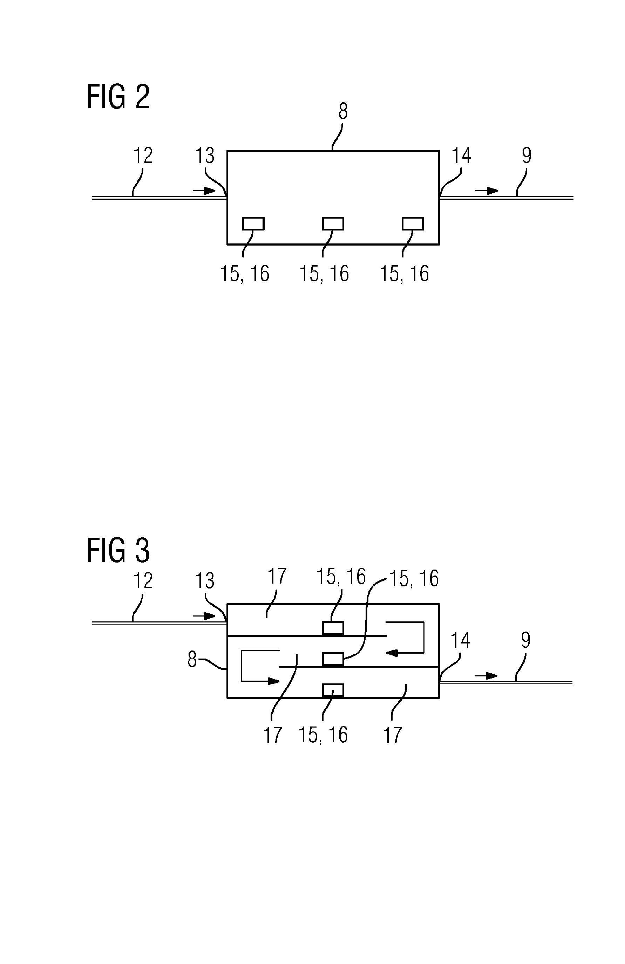

Die Figur 2 zeigt den Tank 8 in einer alternativen Ausführungsform. Im Öltank 8 sind drei Ultraschallsonden 16 angeordnet, die das Lageröl, das über die Zuflussöffnungen 13 in den Öltank gelangt, unter Ultraschallfeldeinfluss entgast. Dazu ist ein Kreislauf des Öls erforderlich, das über die Pumpe 11 erfolgt.

Die Figur 3 zeigt eine alternative Ausführungsform des Öltanks. Hierbei ist der Öltank 8 in mehrere strömungstechnisch miteinander kommunizierende Kammern 17 ausgebildet. Dadurch muss das Lageröl mäanderförmig durch den Öltank 8 strömen. Jeder Kammer ist zumindest eine Ultraschallsonde angeordnet. Dadurch wird die Effizienz der Entgasung erhöht.

Der Öltank ist zur Versorgung der Lager 7 mit Lageröl ausgelegt, wobei die Lager 7 zum Lagern von Strömungsmaschinenrotoren 6, insbesondere Dampfturbinenrotoren 6 ausgelegt sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Öltank (8) für die Ölversorgung eines Lagers (7) mit Lageröl, wobei der Öltank (8) eine Zuflussöffnung (13) zum Zuführen von Lageröl und eine Abflussöffnung (14) zum Abführen von Lageröl aufweist, **dadurch gekennzeichnet, dass** dem Öltank (8)eine Vorrichtung (15) zum Entgasen von Lageröl angeordnet ist.

2. Öltank (8) nach Anspruch 1, wobei die Vorrichtung (15) als Ultraschallsonde (16) ausgebildet ist.

3. Öltank (8) nach Anspruch 2, wobei zumindest drei Ultraschallsonden (16) im Öltank (8) angeordnet sind.

4. Öltank (8) nach Anspruch 2 oder 3, wobei der Öltank (8) mehrere strömungstechnisch miteinander kommunizierende Kammern (17) aufweist und in zumindest einer Kammer (17) eine Ultraschallsonde (16) angeordnet ist.

5. Öltank (8) nach einem der vorhergehenden Ansprüche, wobei der Öltank (8) zur Versorgung von Lagern (7) mit Lageröl ausgelegt ist, wobei die Lager (7) zum Lagern von Strömungsmaschinenrotoren, insbesondere Dampfturbinenrotoren ausgelegt sind.
